# EUROPEAN PATENT APPLICATION

(11) **EP 1 351 113 A2**
(43) Date of publication of application: **08.10.2003**
(21) Application number: 03394026.3
(22) Date of filing: 11.03.2003
(51) Int. Cl.: G06F 1/00

(54) **A biometric authentication system and method**

(30) Priority: 13.03.2002 IE 20020190
(71) Applicant: Daon Holdings Limited, George Town, Grand Cayman (KY)
(72) Inventor: White, Conor, Co. Galway (IE)
(74) Representative: Moore, Barry

(57) **Abstract**

An authentication system and method are described. The system includes a plurality of nodes in a networked architecture, the nodes being adapted to securely communicate with one another. At least one of the nodes is adapted to store a biometric identifier uniquely associated with a user, the stored identifier being used to authenticate the identity of a subsequently provided biometric sample at another of the nodes in the network. The use of a trusted network enables the authentication of users for partner application without compromising the authenticity or identity of a user's biometric sample.

## Description

### Field of the Invention

The present invention relates to the authentication of users or individuals and in particular to a system and method implementing or utilising biometric techniques to authenticate the identity asserted by a user.

### Background to the Invention

With the development of networked infrastructures that are accessible to a plurality of persons there is a need to implement security features to ensure that those persons that gain access to services or stored items within the network are authorised to do so. There is a further need to ensure that the person effecting access is an authentic user of the system.

Known techniques for ensuring security access are to provide a user with a password or other identifier and limiting the access to those persons who present a user identifier and password which matches a previously stored set of identifiers for that user. Problems with such systems are that they are open to "hacking" by persons of unscrupulous nature who can gain access through various methods including stealing or guessing of passwords. Systems which attempt to obviate or lessen the occurrence of a successful unauthorised entry to a secure network or network resource include those provided by RSA. Further examples of known technologies are where the password provided by the user is a constantly changing password which digitally updates itself over a predetermined time sequence. By establishing a relationship between the password provided by the user attempting to gain access and the expected password at the server it is possible to reduce the opportunity of the person of unscrupulous nature gaining access. Nevertheless as the base technology is implemented independent of the personal identity of the user asserting the password and identity there is still an opportunity to overcome the security features offered.

It is also known over local networks to provide a security feature based upon a biometric identifier uniquely associated with the user attempting access. Due to the nature of biometric identifiers it will be appreciated that the indica making up the identifier are determined by the biological make-up of the user associated with the identifier. For example a retina scan or thumb print is uniquely defined by the person presenting those identifiers and the possibility of successfully electronically hacking or counterfeiting the identifier is minimal. Although it is known for using biometric identifiers to authenticate users over a local network or a centralised implementation on a wide area network, heretofore it has not been possible to extend this technology or authentication method over a larger area using a co-operating federation of authentication servers.

There is therefore a need to provide a method and system for authenticating the asserted identity of one or more users over a distributed federation of authentication servers.

### Object of the Invention

It is an object of the present invention to provide a method and system that improves the authentication of a user identity through a scheme of co-operating systems.

### Summary of the Invention

Accordingly, the present invention provides for the authentication of users accessing a network or network resource by means of associating the user identity with one or more biometric identifiers uniquely associatable with that user, and using that biometric identifier to subsequently authenticate the user.

By providing a trust network between a set of Authentication Servers, Partner Applications and individuals using biometric technology for authentication of the individuals, the present invention provides for the storing of a set of parameters or indica definable by a specific biometric type at a central server and using that set of parameters to authenticate a remote user.

The invention provides a federated network of trusted partners, which are adapted to communicate securely in an electronic environment with one another so as to effect the verification or authentication of the identity of a user or users who present themselves at at least one of the partners. The authentication is implemented based on a matching of a presented biometric identifier with a previously stored identifier for that particular user.

It will be appreciated that one or more types of biometric identifiers may be used or implemented and that a typical range of biometric technologies include but should not be limited to finger, face, iris, retina, voice, palm etc.

According to the present invention the authentication of individuals will be carried out by a series of authentication servers (AS). An authentication server will assert an individual's identity to the Partner Applications (PAs) that are part of the system or network of the present invention.

By providing a series or plurality of biometric authentication servers so as to establish a network of trust between a group of individual's (through their biometric) and a set of Partner Applications (PAs), the present invention provides a method and system to improve the security by which a user can be authenticated and enables the creation of massive authentication infrastructures. By the term "massive" it will be appreciated that the present invention intends to encompass non-local networks, global networks either in a secure corporate or non-corporate environment and the like.

It will be appreciated that a PA can be any one of a range of systems that respect the identities asserted by the authentication servers within the network of trust defined by the system of the present invention. In order to secure the interaction between individual components of the system various security protocols may be used to ensure the safe throughput of information.

By providing a plurality of co-operating servers which are provided with means to respect and authenticate on behalf of each other it is possible to implement a non-local authentication system based on biometrics.

Accordingly the invention provides an authentication system adapted to provide an authentication of one or more users over a networked architecture using one or more biometric identifiers previously associated with the users to authenticate the users, the system comprising at least two computing devices at separate nodes in the network:
a first device at a first node being adapted to receive a request for authentication of a user connecting to that node, the request for authentication including a biometric identifier provided by the user, the first device being further adapted based on a indica associated with that user to determine a second device at a second node for the user, the second device having a previously stored biometric identifier associated with the user, the first device being further adapted to forward a request for retrieval at the second device of the previously stored biometric identifier associated with the user to that second device,
the second device being adapted upon receipt of the request from the first device to retrieve the previously stored identifier for that user,
comparison means adapted to establish an authentication of the user based on a positive comparison between the identifier provided by the user at the first device and one previously stored and associated with the user at the second device.

Desirably the system provides a framework for establishing a network of authenticating servers and associated biometric capture devices, and wherein one or more of the authenticating servers or biometric capture devices can establish and assert a user identity to others of authenticating servers or biometric capture devices.

Preferably the computing devices at each node are selected from one or more of the following:
an authentication server,
a biometric capture device.

In a first embodiment the comparison means are provided at the first device, such that on retrieval of the previously stored identifier at the second device, the second device is adapted to forward a copy of the identifier to the first device, which upon receipt is adapted to effect a comparison.

In another embodiment the comparison means are provided at the second device, such that on retrieval of the previously stored identifier at the second device, the second device is adapted to effect a comparison between the identifier forwarded by the first device to the second device and that previously stored and associated with the user. Typically, upon effecting a comparison of the provided identifier with the previously stored identifier is adapted to effect a communication to the first device detailing the result of the authentication process.

Desirably, the second device is provided with means to effect a search of plurality of previously stored biometric identifiers based on a indica associated with that user.

Verification means are desirably provided at at least one of the first and second devices, the verification means adapted to effect a verification of the identity of the other of the first and second device.

Typically, communications between the first and second devices are by means of a secure communication channel, which is desirably provided by one or more of the following protocols:
Secure Socket Layer (SSL),
eXtensible Mark Up Language (XML),
digital certificates,
or any form of symmetric or asymmetric cryptography,

Desirably the invention additionally provides within the system a partner application device located at the first node, the partner application device adapted, upon authentication of the user, to process a request provided by the user.

The invention also provides a method of authenticating the identity of one or more users over a networked architecture the method comprising the steps of:
receiving a request for authentication of a user identity at a first network node,
determining a home node for that user, the home node having a previously stored biometric identifier associated with the user,
forwarding a request for authentication of the user to the home node, the request including a biometric identifier captured for that user, the receipt of the biometric identifier at the home node effecting a comparison of the received identifier with the previously stored identifier, receiving confirmation at the first node that the user is authenticated upon effecting a match between the received identifier and the stored identifier.

In another embodiment a method of authenticating the identity of one or more users over a networked architecture is provided, the method comprising the steps of:
receiving a request for authentication of a user identity at a first network node, the request including a biometric identifier associated with the user,
determining a home node for that user, the home node having a previously stored biometric identifier associated with the user,
forwarding a request for a copy of the stored identifier to the home node, the request including an identifier associatable with the biometric identifier stored for that user,
receiving a copy of the previously stored identifier from the home node,
comparing the retrieved previously stored identifier with the captured identifier and authenticating the user upon confirming a matching set, and
wherein the home node only returns a copy of the stored identifier to the first node upon verification of the identity of the first node.

These and other features of the present invention will be better understood with reference to the following drawings.

### Brief Description of the Drawings

Figure 1 shows a trusted network system according to the present invention,
Figure 2 is a flow sequence identifying a method of authenticating a user according to the present invention,
Figure 3 is a process sequence showing an authentication of a user according to one embodiment of the present invention,
Figure 4 is a flow sequence showing the determination of the correct home authentication server for a specific user according to the present invention,
Figure 5 is an example of a hierarchy of trust between a group of co-operating authentication servers according to another embodiment of the present invention,
Figure 6 shows a logic flow for when authentication is performed at a HAS in accordance with one embodiment of the present invention,
Figure 7 is a logic flow showing a sequence of steps used for authentication of a user at a secure device or FAS according to a further embodiment of the invention, and
Figure 8 is a process sequence showing an authentication of a user based on a service policy and policy management according to one embodiment of the present invention.

### Detailed Description of the Drawings

Within the present specification certain terms will be used to represent certain components of the system. The following list of definitions is intended to define these terms for ease of explanation and understanding of the following description of an exemplary embodiment of the present invention.
- Authentication Server (AS): A system authenticating an individual based on one or more of their biometrics. This could be an identification or a verification system. A verification system uses a claim and a biometric to authenticate a user against an enrolled biometric. An identification system does not need the identity claim - it determines the identity claim based on the biometric alone.
- Home Authentication Server (HAS): The Home Authentication Server is the authentication server the user is enrolled at. It is the server where his/her identity and enrolment biometric are stored.
- Foreign Authentication Server (FAS): A Foreign Authentication Server is an Authentication Server participating in the federation of authentication servers which is not the individual's HAS.
- Partner Application (PA): A Partner Application is a business application which is providing service to a user and requires the authentication of the user.
- Identity Data Element (IDE): An Identity Data Element is a piece of information (or a set of IDEs) which comprise information about the individual. Examples of IDEs include (but are not limited to) social security number, credit card number, email address, employee id, dynamically generated authentication tickets etc.
- Biometric: A biometric is any one of a plurality of biological identifiers which can be associated with a user such as but not limited to an identifier defined by finger, iris, voice, face, DNA etc..
- Biometric Capture Device: A biometric capture device is intended to include devices suitable for reading various biometric modalities including finger, iris, voice, face etc. The Biometric Capture Device for the purpose of this invention also includes the controlling software for the device - whether residing on the device or another device such as a client PC for example.
- Authenticator: An authenticator is an algorithm or process that takes inputted authentication data and enrolment data as input and returns an output or set of outputs indicating the outcome of the authentication. In the case of a biometric authenticator these outputs may include a confidence score associated with the matching process and expected error rates. Authentication data is captured from the individual and sent to the authenticator for verification. Such data can consist of a biometric and an identity data element. Alternatively, it might for example consist of data from a user-held hardware token such as a smart card.
- Authenticator Datastore: Data necessary to authenticate an individual at an AS, HAS, or FAS is desirably stored within a dedicated secure database, termed the authenticator datastore. For example, the authenticator datastore might contain an IDE and an enrolled biometric for an individual.
- Policy: An authentication policy, defining requirements and characteristics of a user verification or identification, is associated with each authentication request. One function of the policy is to define the confidence required in the authentication; for example, the policy might require that the False Match Rate (FMR), associated with a biometric authentication, be no greater than 1 in a million. The FMR is the probability that an impostor biometric incorrectly is matched with a genuine user biometric.
- Policy Manager: Policies are controlled and enforced by a policy manager. For example, if a FAS initiates a user authentication for a particular service, it will associate a policy with that service. The policy for the service may dictate that a minimum confidence is required before the user may transact with the service. The policy manager can be located at the biometric device itself, at the FAS, HAS, or PA. It will be appreciated that the policy manager according to the present invention may be provided with the functionality to make decisions as to whether a presented user is authorised or not. In such circumstances results and associated data from the matching process are returned by the HAS to the policy manager which then, based on parameters defined for the policy in question, confirms whether the user should be authenticated or not. Such parameters could include for example the confidence that the policy manager has associated with the HAS providing the matched sample. For example if the user had originally provided their biometric sample to a HAS operated by a government agency, that HAS would be accorded a higher confidence level than a HAS operated by a non-governmental agency. Other parameters could include the level of matching that was achieved in the comparison of the presented biometric identifier to the stored identifier.

The system of the present invention provides a biometric trust infrastructure or BTI. Within the implementation of the system of the present invention it is important to separate the actual identifier associated with a user- the person's biometric, from the Partner Application (PA) that is requesting the authentication. It will be appreciated that this separation is desirable for a number of reasons including: a protection of the privacy of the individual, a protection of the integrity of the BTI, and to allow for technology advances in biometrics in the immediate future without hampering the delivery and rollout of applications. According to a preferred embodiment of the present invention the authentication of persons is conducted by one or more Authentication Servers (AS), which are used to assert a person's identity to the Partner Application that is implemented within the BTI. It will be appreciated that in order to implement a trusted infrastructure that the individual components within the BTI should communicate with one another in a secure manner such as that established through the use of public key cryptography and digital signatures. It will be appreciated that the method of the present invention provides for the encryption of sensitive protocols. Many forms of establishing trust are known and will be appreciated by those skilled in the art including both symmetric and asymmetric encryption, signature schemes, SSL techniques and XML documents.

By implementation of a trusted AS infrastructure, re-use of enrolment is promoted. This does not mean that an individual has to re-enrol on each presentation, rather that their identity can be asserted to another AS which can then assert it to one of its registered PAs. This it will be appreciated is advantageous in that once a set of parameters or biometric identifiers have been stored within an AS, these parameters can be used at a later date to establish new networks of trust without requiring the user to re-define or re-present the identifier. This is beneficial and advantageous in that the set of identifiers can be used to extend the trust infrastructure without the rigours of a re-registration process. By sharing of the enrolment and identity across or between schemes the present invention offers a more robust system of implementation and expansion.

It will be understood that the concept of sharing enrolments across organisations or networks has traditionally been viewed as dangerous or controversial from a consumer acceptance perspective. Fears of selling biometric data and giving away identity invoke all the wrong images in the minds of the consumer. In one embodiment of the present invention the system of the present invention obviates these problems by performing the authentication at a remote trusted server which stores the identifiers. In such an implementation the partner applications do not gain access to the original data set and therefore it cannot be compromised. In another embodiment of the invention although a copy of the data set is sent to the requesting node which performs the authentication against the presented biometric set locally, the data set is only sent to those nodes whose identity has been tested. It will be appreciated that such a testing or verification of the identity of the requesting node is also advantageous in that an audit trail may be implemented to ensure that use of the claim set may be monitored.

By implementing a BTI according to the present invention benefits are provided to both the PA and the individual. The benefits to the PA include:
- Cost savings: The process of enrolment is a costly one. By enabling the reuse of earlier enrolments (on other Authentication Servers), a PA can leverage on an increased user population with little or no incremental cost.
- Scalability: A BTI according to the present invention is a scaleable, fault tolerant infrastructure with no single point of failure.
- Reach: By offering a global, connected, authentication & trust infrastructure, the PA can attain a global trusted set of users without having to put their own processes/presence in each area.
- Re-use: The ability to effectively "re-use" the identification of the individual without having to go through an enrolment process. The sharing of a stored biometric identifier across a network of multiple nodes so as to effect the authentication of a user enables the system of the present invention to provide a secure initial record of the biometric set and then repeatably use that set for subsequent authentications.

From a consumer's perspective, the following are key benefits:
- Security & Privacy: Consumer privacy is ensured through the separation of the authentication services from the Partner Agents.
Furthermore, biometrics offer an extremely high level of security and identification - reducing significantly the risk of *identity theft.*
- Service: Consumers who sign up to the BTI can avail of a wide range of services provided by the PA if they wish to do so.
- Convenience: An individual can avail of many different services offered by various PA's participating in the BTI without having to re-enrol for each and every authentication server.

### Enrolment

This section describes an example of a process that may be used to enable the enrolment of a user with a BTI according to the present invention.

In a BTI according to the present invention, users generally enrol at their Home Authentication Server (HAS). The HAS is the Authentication Server (AS) which stores the user's biometric data and performs the enrolment function. It will be appreciated that as the BTI of the present invention provides for a trusted network between authentication server that specific authentication servers could provide a dual function; they could be a home authentication server for some user thereby storing their biometric data and also be a simple authentication server for other users who have nominated another authentication server as their HAS.

The HAS is also the AS that authenticates the user.

The process for the enrolment of users is well documented within the art and for the sake of simplicity is not repeated here. Once a user has enrolled with an AS, the stored identifier can be used to authenticate the user at a later date.

### Algorithm Migration

Within typical state-of-the-art enrolment applications, a biometric matching algorithm is used to generate a template that is stored as part of the enrolment data. This template is usually a small summary representation of the captured biometric data, and the template generation function is one-way in that it is not possible to re-generate the original raw biometric data from the template alone. However, one drawback of this is that the template is usable by one particular biometric algorithm only, the algorithm that generated it. If a new algorithm is to be introduced the user must then be re-enrolled again and a new template for the new algorithm generated.

However, by recording the raw biometric data, such as a fingerprint image, at enrolment, migration from one algorithm to another may occur without re-enrolment. At a high-level the raw biometric data is associated with the user's IDE and template, and stored during the enrolment process. The raw data may be stored at the enrolling HAS. When a new algorithm is introduced, a template for use with that new algorithm may be automatically generated from the stored raw biometric data. In a similar fashion, the raw biometric data may also be used, if necessary, when migrating from one biometric device to another, or to provide device interoperability, where users enrol on one device but verify from another device with different characteristics.

Alternatively, for privacy reasons, the raw biometric data may be stored at a separate highly trusted authentication engines (AE's). These trust AEs can generate new enrolment templates for specific algorithms, for a requesting HAS or other entity, without having to release the actual raw biometric. In another embodiment it is also possible to split the raw biometric data into several pieces, at capture time, and store these pieces across several independent AEs. Generic data splitting algorithms are documented within the cryptographic state-of-the-art.

### Enrolment Trust Levels

A trust level may optionally be associated with each user at enrolment. This trust level represents the confidence that the enroller has in the asserted identity of the enrolee. For example, the trust level can depend on the form of identification (e.g. passport, drivers license, employee card) presented by the enrolee and the credentials of the enroller. The trust level is an indication of the validity of the identity claim associated with a given enrolled biometric. The trust level may then be stored at the HAS, along with other enrolment data for a specific user.

During authentication, the trust level associated with the user may be returned to the entity requesting the authentication, and used in making a final authentication decision. It may also be used in evaluation of the authentication policy. Policies are described in more detail later.

### Multi-modal Enrolments

A user might enrol more than one biometric type at a HAS. It is also possible for a user to enrol one or more different biometric types at different HAS servers. For example, a user might enrol their fingers at one HAS (e.g. their bank), and later enrol iris data at another HAS (e.g. a local airport). Either or both HASs may be contacted during an authentication of that user. If both home servers are contacted during an authentication, the overall result can be based on combining the two or more individual results from each server - this is done by a policy manager, described later.

### Identity Elements

An individual can have a Personal Identity with multiple Identity Data Elements - for example, a public key certificate with its corresponding private key, a name, a credit card number etc.

The authentication process involves the identification or verification of the user by comparing the biometric data registered at enrolment with the biometric data captured during the authentication process.

The authentication process may return one or more of the IDEs as requested by the PA or FAS. In some cases, no IDEs may be requested (or authorised for sharing by the individual) and the returned identity data set may be null. In these circumstances a simple assertion of biometric authenticity may be used.

### BTI Architectural Overview

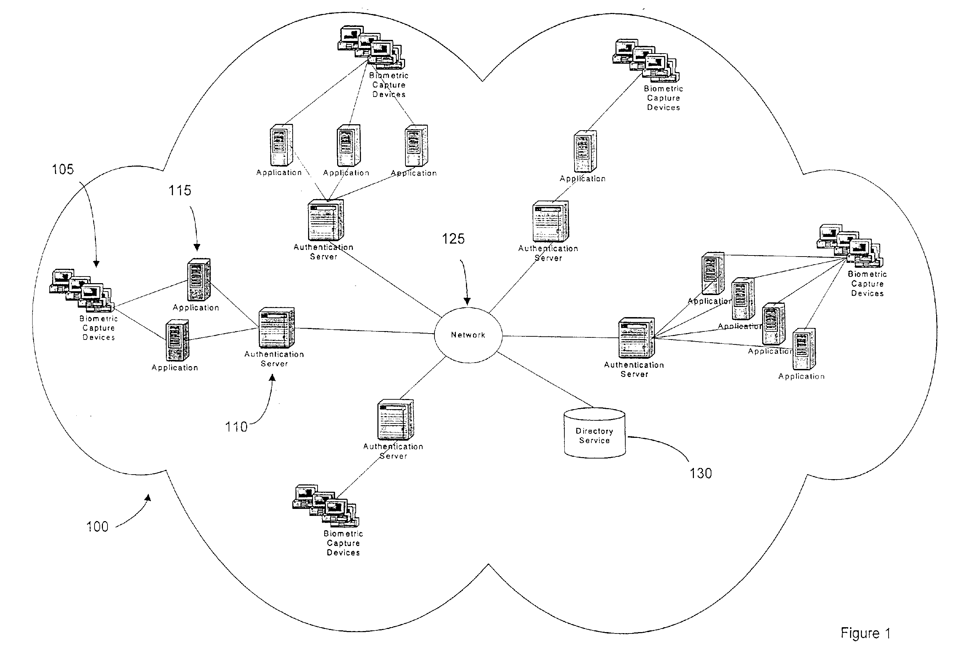

Figure 1 shows an example deployment of a BTI 100. The network infrastructure comprises a plurality of computing devices at different nodes within the network and adapted to communicate with one another over the network. As shown in the exemplary embodiment of Figure 1 each node of the network is provided with at least one biometric capture device 105 which is of the type known in the art to capture a biometric identifier from a user and process that identifier into an electronic set of indicia representative of the biometric. The Biometric Capture Devices 105 are one or more devices connected to partner applications 115 or Authentication Servers 110 which capture a user's biometric information and claim of identity. Within the present specification the term "Biometric Capture Device" is intended to define the biometric data capture hardware as well as any controlling software (for example on the device itself or a connected controller such as a Personal Computer).

Each of the capture devices 105 may be linkable to an application device 115 provided on the network or directly linkable to an authentication server 110. The Partner Application or Applications 115 are the systems that require a level of trust in the identity of the individual before they offer their services. In general, the accompanying figures to this specification show the connection to the Partner Application from the Biometric Capture Device. It will be appreciated that this connection could be a connection to an agent (client) of the Authentication Server or in fact could be a direct connection to the server itself. It is important to note that a node in the network as shown in Figure 1 is a logical clustering of Biometric Capture Devices, Applications and Authentication Servers for illustrative purposes. The diagram is not intended to limit the present invention to any physical layout of the network, as it will be appreciated by those skilled in the art that many modifications may be made to a network architecture while maintaining the empirical characteristics of the network. For example, it is envisaged that the Internet may be used to connect all of these components together. Components of a logical node in the aforementioned diagram do not have to be co-resident.

The Authentication Server 115 is the component which manages the biometric enrolment and identity management for one or more users. It also understands the routing protocols and security protocols necessary to connect to other Authentication Servers to forward biometric claims and understand the response therefrom. It should be noted that the Authentication Server can perform the biometric matching itself or in some cases, it may return the enrolment biometric (through a suitably secured channel) to a biometric matching component which could for example be running on the Biometric Capture Device.

Each of the authentication servers are adapted to communicate with one another over a network 125 which provides connectivity between all the components in the scheme. The network can be any electronic communications network, and as will be appreciated by those skilled in the art can be implemented as one or more of the following:
1. Private Network - e.g. operated by a group of companies
2. Internet - the most prolific network available.
3. Mobile Network - for example one or mobile telecommunications operators may decide to offer BTI services.

It is envisaged and will be appreciated that the connection from the biometric capture device to the application to the authentication server could be done over the same network.

Communication or routing between individual nodes within the network is, in accordance with one embodiment of the invention, provided by a centrally updated directory service 130, which stores routing information for each of the registered users of the network system. On receiving a request for the correct home authentication server for a particular user (i.e. the server which is storing the registered biometric set for that user) the directory service searches through data records to select the correct routing for that user. More information of this sequence will be provided later in this document.

It is important to understand that the directory service could be a replicated one with one or more nodes or could be a simple database or data file lookup provided on a networked machine or the local machine.

### Authentication of the Individual

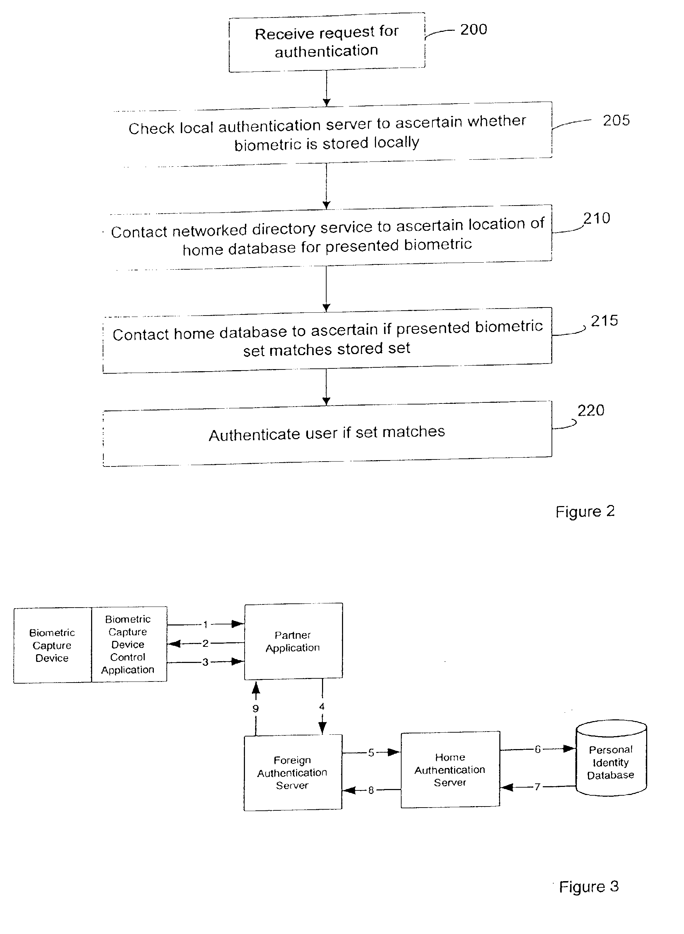

Figure 2 shows a typical flow sequence associated with an authentication of a user at an authentication server 110. The server 110 receives a request for authentication from the user who has connected to that node (Step 200). The server checks internally to ascertain whether that user is registered locally (Step 205). On ascertaining that the user is not locally registered the networked directory service (130) is contacted to ascertain the correct routing information (Step 210). On contacting the home authentication server it is possible to effect a comparison of the presented biometric identifier and that previously stored for the specific user (Step 215). This enables an authentication of the user (Step 220).

Further details of an authentication operation is shown in Figure 3.

Step 1, The client (composed of the biometric capture device hardware and any client side applications) connects to the partner application to request access to a protected resource.

The client could typically be a finger image capture device and associated software (on the device and on a PC). Of course, biometrics addressed by this invention include finger, iris, voice, face, retina, and hand among others.

Step 2, the partner application or a component of an authentication engine will request the authentication of the user.

Step 3, the user provides a biometric through the biometric capture device to the partner application. This step could also include an optional identity claim/assertion.

Step 4, the PA forwards the biometric claim to its local Authentication Server (shown here as the FAS, because it is not the Authentication Server where the user enrolled and where their biometrics are stored).

Step 5, the FAS determines that it is not the HAS of the individual and routes the message to the individual's HAS. It will be appreciated that various methods are available for doing this, examples of which will be described elsewhere within the present specification.

Step 6, the HAS authenticates the user against the biometric data previously enrolled. This can be a 1 to 1 match (verification) or may involve an identification activity (1 to Many).

Step 7, the match is successful and the HAS retrieves the identity data elements from the Personal Identity Database. As outlined earlier, the retrieval of these data elements is optional and the returned information may be as simple as a Boolean yes/no answer of a biometric match algorithm scoring.

Step 8, the HAS then returns the data set it built in step 7 to the FAS.

Step 9, the FAS then returns the data set to the partner application. In some cases, data may be added or removed from the data set passed between the FAS and the PA.

Step 10, the PA then decides, based on the data set it has received, whether to grant access to the resource requested by the individual.

It will be appreciated by those skilled in the art that the messages between the components are desirably encrypted and signed. It will be further appreciated by those skilled in the art the sequence of steps and the process itself as outlined above is exemplary of a specific embodiment of the present invention and that modifications may be made without departing from the spirit and scope of the present invention.

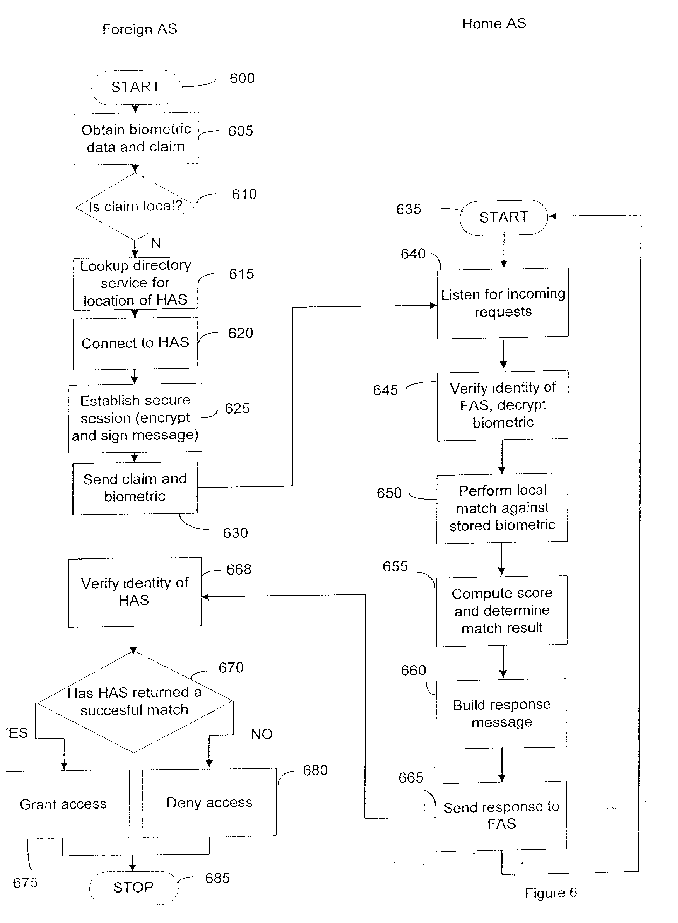

Figure 6 details a flow sequence where the authentication of a user is conducted at a HAS, in accordance with one embodiment of the present invention.

The user connects to the Foreign Authentication Server (FAS) (Step 600). The applications or devices provided at the server or one of its clients effect a capture of biometric data from the user and a claim of identity for that user (Step 605). On querying that the claim is not local (Step 610), a directory service is searched to determine the correct location of the HAS for that user (Step 615). A connection is effected to that HAS (Step 620). In order to ensure that communications between the FAS and the HAS are in a secure mode, a secure session may be implemented which incorporates the steps of encrypting and signing the message to be despatched to the HAS (Step 625). On effecting the secure communication the claim and biometric are forwarded to the HAS (Step 630).

The HAS is typically always in a stand-by mode adapted to listen for incoming requests (Steps 635, 640). On receipt of a incoming message the identity of the FAS is verified using known techniques such as an electronic signature etc. The supplied biometric is decrypted (Step 645). A match determination is effected against a locally stored biometric which shares the same claim identifier as that supplied by the user (Step 650). On concluding the determination of the match a result is effected (Step 655).

A response message is formed (Step 660) and returned to the FAS that initiated the request (Step 665).

On receipt of the returned message from the HAS, the FAS effects a check to ensure that the message returned did originate with the desired HAS (Step 668). The message is then checked to ascertain whether the HAS returned a successful match (Step 670). If successful access is granted (Step 675), otherwise it is denied (Step 680). This concludes the process until a new request for authentication is provided (Step 685).

### Matching at Capture Device

A variant of the implementation exists, where the HAS does not perform the matching, but instead, having verified the credentials of the requesting FAS (and even perhaps the Biometric Capture Device), it instead securely packages the enrolled biometric and returns it to the FAS which can then present it securely to the Biometric Capture Device.

The Biometric Capture Device can then locally (and securely) match this biometric against the one presented by the individual at the authentication stage.

An alternative embodiment allows for the FAS to perform the matching by obtaining the presented biometric from the Biometric Capture Device and performing a match against the biometric obtained from the HAS.

Should a match be successful, the Biometric Capture Device will then inform the Partner Application, which may then grant access to the requested resource.

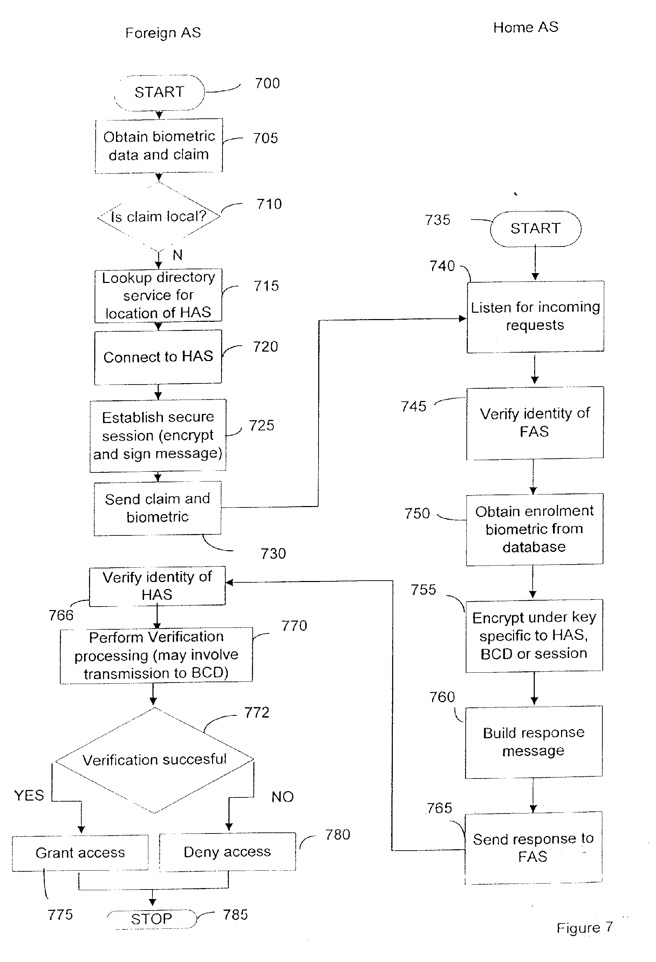

Figure 7 shows such an alternative flow sequence, implemented when the FAS or Biometric Capture Device performs the authentication as opposed to the HAS. A user provides biometric data and a claim of identity to the FAS (Step 705). On determining that the claim is not locally matchable (Step 710), a lookup directory is contacted to ascertain the correct routing information to the HAS associated with that user (Step 715). A connection is effected to that HAS (Step 720) and secure communication established (Step 725). A copy of the claim and biometric are provided to the HAS (Step 730).

Similarly to that described above with reference to the HAS verification, the HAS is in a stand-by mode waiting on incoming requests (Step 735, 740). On receipt of a request, the identity of the FAS effecting the request is verified and the biometric decrypted (Step 745). The correct enrolment data for the user being authenticated is retrieved from the HAS database (Step 750), and a copy of this data in encrypted under a relevant key for this communication session using techniques known in the art (Step 755). For example, the biometric component of the communication may be encrypted under a key known to the Biometric Capture Device (BCD) where it will be decrypted for matching. Alternatively, the encryption key could be known to the FAS which could do the matching.

A response message is established (Step 765) and the message returned to the FAS (Step 765).

On receipt of the message from the HAS, the FAS effects a verification of the identity of the HAS to ensure that the communication has not been compromised (Step 766). The returned copy of the biometric identifier for the user is then compared to that supplied by the user at the beginning of the session (Step 770). A check to ascertain whether a match is present (Step 772) returns of grant of access (Step 775) is a match is effected, otherwise access is denied (Step 780). The session is the terminated (Step 780).

Step 770 (perform verification processing) could be carried out on the biometric capture device itself. The invention allows for a scenario where the encryption of the encoded biometric is carried out under a key known to the Biometric Capture Device. In this scenario, the matching would be done between enrolled and presented biometrics by the biometric capture device (the FAS simply passing the biometric from the HAS to the capture device). In this embodiment, the capture device would return a result on the match to the application and/or the FAS.

It will be appreciated that the order and presence of some or all of the sequence of steps highlighted and described in the flow charts above are of exemplary embodiments of the present invention and it is not intended to limit the present invention to any specifically ordered sequence.

### Policy Management

The function of policies and policy management was described earlier. The policy informs the policy manager of the authentication data (e.g. biometric samples) that should be collected, the algorithms that should be applied, the confidence levels in the entities involved and the matching results that should be attained, and how these confidence levels can be calculated, amongst other things.

The policy may be enforced by either the HAS, FAS, biometric device itself, or a combination of these working together. The policy to use may be associated with a service at the requesting PA, or may be created or amended by one of the other entities. For example, the PA may request a biometric confidence where the false match rate (FMR) is no less than 1 in a million (FMR <= 0.000001) for a particular transaction, and this will form part of the requested policy to apply to the user authentication.

The policy is typically passed to the entity where the actual authentication takes place. Alternatively, the policy may be evaluated by another entity based on results obtained from the entity performing the authentication. For example, if the HAS performs a biometric match, it may decide the authentication outcome based on the requested policy, or it may pass back authentication results to the FAS or a separate stand-alone policy manager and let the outcome be evaluated against the policy there. It will be appreciated further that a policy manager may be provided with functionality to define the type and quantity of biometric sample that should be presented by the user in order to effect authentication. Such functionality requires an interface, typically a GUI type interface, at the biometric capture device to inform the user of the type of biometric sample that is required for the service that they wish to avail of. The policy manager may be adapted to provide a plurality of policies for a partner application. The level of security required for or to be associated with the user's interaction with the partner application will determine the type of policy implemented. For example, if a user wishes to conduct a financial transaction to a value of upto a first amount a first level of security may be required, whereas for values in excess of this first amount an increased level of security may be required. Such intelligence associated with a policy manager enables a distribution of the functionality of the trusted network of the present invention away from single nodes.

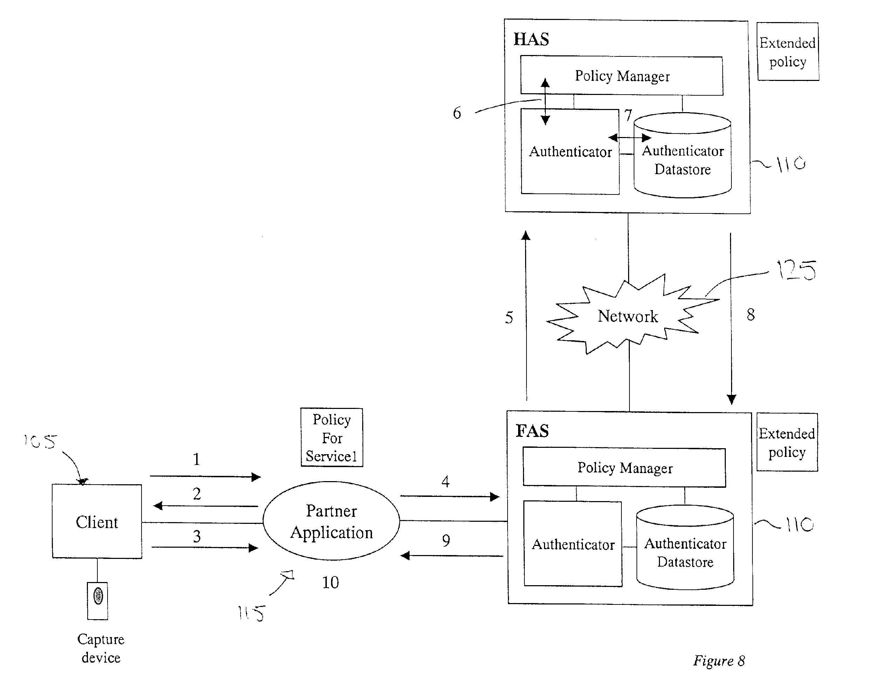

Figure 8 illustrates one embodiment of user authentication using policy managers and policies. The authentication steps are similar to those in Figure 3, and only the additional steps involving policies are detailed here.

After receiving the user request to access a specific service in step 1 the partner application retrieves a locally stored policy associated with that service. In this case the policy instructs the PA as to which biometric authentication data to capture from the user. For example, it might specify to capture two fingerprint images from two different fingers. The appropriate authentication request is sent in step 2 to the client, and a response received in step 3. The authentication data and the policy itself are sent to the FAS in step 4. A policy identifier may be used to identify a particular policy and be sent in step 4 instead of the full policy itself. In step 5 the FAS will examine the policy and decide if any additional fields need to be added to it, before forwarding it along with the authentication data to the HAS in step 5. Again, if a standard policy is used, a policy identifier may suffice.

The HAS evaluates the policy, selects a matching algorithm and sets the parameters appropriately, and performs biometric authentication in accordance with it in steps 6 and 7. Depending on the policy it may be necessary for the HAS to request further biometric samples from the user, via the FAS and PA, during these steps.

The method of combining the scores obtained from matching two fingers is defined in the policy and the verification outcome is based on the confidence required by that policy, which will map to specific combined scores for a specific matching algorithm in the given environment. The outcome, along with optional results relating to the policy, are returned to the FAS in step 8. Optional data returned might include the actual confidence levels, or biometric error rates such as FMR and false non-match rate (FNMR) achieved. The authentication result is returned to the PA in step 9, and the final access decision is made by the PA in step 10.

Multiple entities may fulfil part of the policy management for a particular authentication request. For example, a HAS may combine multiple matching scores for one biometric according to the requested policy, before returning them to an FAS who performs further combinational steps, perhaps using results from further multi-modal matches.

### Multiple samples

An authentication policy can request that a user submit multiple samples of the same biometric; for example, the user might be asked to touch a fingerprint device three times to submit three images of the finger. Alternatively, the same user might be asked to touch the device with three different fingers. In either case, the samples may be packaged up in a single request, and routed to the appropriate FAS or HAS as before. Instead of performing a single biometric match, the entity performing the match may now perform three separate matches. The policy manager will combine results from each individual match.

### Multi-modal Authentications

An authentication policy may indicate that a user should submit two or more biometric samples, either of the same biometric type or of different biometric types (multi-modal). If the corresponding enrolled biometric data is located at a single HAS, then the authentication process is as before, except that multiple samples of biometric data are sent or received from the HAS. The policy manager will use the authentication policy to combine verification results of each individual biometric, to return an overall authentication result.

However, it is also possible that the required biometric enrolments are located at different independent HASs. In such a case one entity will be the central policy manager for the authentication; typically this will be the FAS, but it could equally well be one of the HASs. The policy manager will co-ordinate routing the separate requests to each HAS, and collating and combining the results as they are returned.

### Multiple Algorithms

A large number of different biometric matching algorithms exist, even for the same biometric type. Therefore, situations may arise where different capture terminals generate templates using different algorithms, or different HASs use different default algorithms. In order to allow for this, any authentication request should indicate which algorithm has been used to generate the submitted template(s). Even in the case where a raw biometric is submitted, it may be necessary to indicate which quality algorithms have been applied.

Furthermore, the authentication policy can indicate preferred algorithms to use, or indicate required scores that must be obtained if specific algorithms are applied during the authentication.

### HAS Challenges

The HAS server stores enrolled user biometrics, and therefore knows exactly what biometric data is enrolled for a particular user. A specific policy may request that one specific biometric is randomly requested from the enrolled set. This might be done for example, to help prevent the risk of biometric spoofing or biometric replay attacks.

In such cases, the HAS is best suited to interpret the policy and request the selected biometric from the user. For example, if a user has four fingers enrolled, the HAS may request a particular finger from the user. The user must respond to the HAS challenge with a sample of the correct finger to be successfully authenticated against the policy.

### Establishing the HAS

The system and method of the present invention are, in accordance with one embodiment of the present invention, desirably adapted to provide for a physical separation of an identifier set associated with a specific user from the Partner Application that is using the set to authenticate the user. The set used to verify or authenticate the identity of the user is remotely stored from the applications or network nodes to which the request for authentication is provided. It will be appreciated, therefore that in order to efficiently provide authentication that an efficient process for finding the enrolment point or home node for an individual, and hence where the biometric template is stored is required.

In a distributed BTI system of the present invention it is necessary to be able to:
1. Quickly find an individual's biometric template within the networked architecture
2. Ensure that duplicate identity claims registered are not registered at the same time - for example, on 2 separate nodes within the BTI.

This is provided by the method implemented by the present invention to determine the correct HAS by a FAS.

Two sample methods are outlined here, although it will be appreciated that these are exemplary of the type of method that may be applied and that it is not intended to limit the invention to such methods or techniques. For ease of explanation the methods will be termed the "Fully Qualified Identity Method" and the "Hierarchical Determination Method".

### Fully Qualified Identity Method

In the fully qualified identity model (FQIM), the user presents an identity claim. The claim includes information allowing the unambiguous determination of the HAS from the identity claim.

The information in the claim allows the routing of the authentication requests from the FAS to the HAS.

Various notation schemes can be used - from a hierarchical structure such as DNS or LDAP to a flatter structure with little or no hierarchy.

Examples of this include:
cwhite@bti.daon.com (hierarchical DNS structure)
cwhite:bti1 (flat structure)

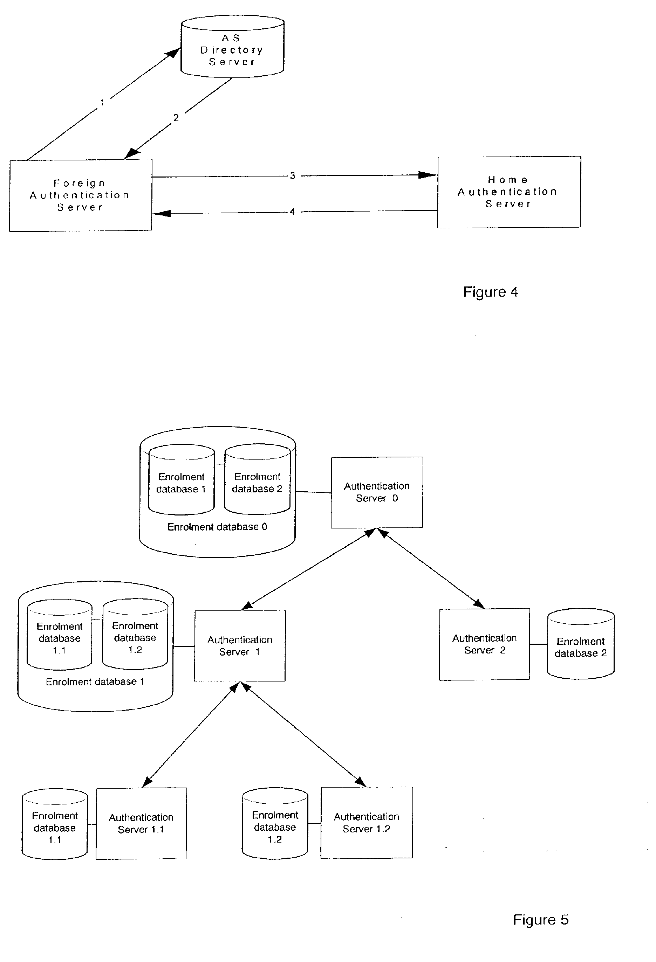

In both models a directory service can be used to identify the network location of the HAS such as that shown in Figure 4.

Step 1, the FAS extracts the HAS name from the qualified identity claim and connects to an AS directory server to determine the network address of the HAS.

Step 2, the AS looks up the HAS name in its directory database and returns the network address should it be found.

Step 3 and 4, the FAS connects to the HAS and requests and authentication of the user by sending the claim of identity and the captured biometric information. The HAS authenticates the user and returns the result (including any IDEs to the FAS).

It should be understood that the claim can be provided in a number of ways to the system including (but not limited to) :
1. The individual entering it via a keyboard
2. It may be stored on a token - for example
   a) Magnetic stripe card
   b) Chip card
   c) 2D Bar code

It is also understood as mentioned earlier that the term directory or directory service relates to a location (network or local) where a lookup is performed to determine the location of the HAS. Many methods are available to those skilled in the art to implement this lookup functionality.

### Hierarchical Determination Method

In a hierarchical determination method, a hierarchy of trust is established between a group of co-operating authentication servers.

Each server in the hierarchy contains a replicated set of enrolments equivalent to all authentication servers under it.

An example of the implementation of such a method is illustrated in Figure 5. In the example hierarchy above, each AS has its enrolment database associated with it.

From the example illustrated in Figure 5 it will be appreciated that the hierarchy may be provided in tree structure, and as you move up in the hierarchy or tree each enrolment database contains its own enrolment records plus the enrolment records of each of its subordinate servers. For example the authentication servers 1.1 and 1.2 both have their respective enrolment databases; enrolment database 1.1 and 1.2. These servers are branches of authentication server 1 which has access to both enrolment database 1.1 and 1.2, in addition to its own enrolment database; enrolment database 1. Server 1 is independent of server 2, which has its respective database, enrolment database 2. Both server 1 and 2 are children of Authentication server 0 which has access to all subsidiary databases.

As a consequence of this, the root authentication server, Authentication Server 0, contains the enrolment records for the entire scheme or trusted network.

It will be appreciated that an implementation of this model requires the synchronisation of all components in the scheme. As an enrolment record is added, modified or deleted for a given HAS, all its superior nodes must be updated in a responsive manner. Various protocols are available for this, and will be appreciated by those skilled in the art.

The Hierarchical Determination Method lends itself to the identification of individuals in large distributed biometric systems where no claim of identity is made by the individual.

The process of authenticating an individual is to first check the local enrolment database. Should a match not be found, forward the request for authentication to the authentication server at the next highest level. If an authentication server successfully authenticates the individual, the search is complete.

If necessary, the authentication request will make its way all the way to the root AS. Should it not be successful at this point, then the search is deemed a failure.

### Chaining requests

Although in many of the examples provided authentication requests were passed from a FAS to a HAS directly, it is also possible that intermediary AS nodes are used between these servers to route the requests.

### User signing

The BTI architecture allows for more than just re-use of enrolments for authentication in a distributed trust environment. It can also be used to allow individuals to sign data and transactions while roaming. As part of the authentication a hash of the item to be signed is also routed to the HAS. If the user has registered an asymmetric public-private signing key with the HAS, this key may be applied by the HAS, on the user's behalf, to sign the document after a successful authentication.

### Billing

Authentication servers may track the number of authentication requests and bill each other for these requests accordingly.

### Securing the BTI network

It will be appreciated that the authentication servers within the BTI must be able to trust each other. There are many ways to establish a trusted network, for example to establish and maintain this trust, messages between the components are typically encrypted and signed. Different schemes are available in the art for doing this including both asymmetric and symmetric cryptography, and will be appreciated by those skilled in the art.

A claim is made in this invention for the use of asymmetric or symmetric cryptographic algorithms and protocols to establish a trust or secured link between biometric authentication servers acting as HAS and FAS.

One scheme is presented as follows, but will be understood as exemplary of the type of scheme that may be implemented and is not intended to limit the present invention to any one applied scheme.

The model is based on existing Public Key Infrastructure (PKI) standards, although it will be appreciated that other techniques may be applied or utilised without departing from the scope of the present invention. Each Authentication engine is assigned a public-private key pair by a Certificate Authority (CA) (or generates the key pair itself). The CA signs the public key of the AS with its own private key. The corresponding public key of the CA is embedded in each AS server. This allows an AS to establish the bona-fida credentials of a different AS and thus establish a network of trust.

The key pair assigned to each AS can be generated by the AS itself and the public component exported to the CA or the CA - or its RA (registration authority component) can produce the key pair on behalf of the AS.

In the latter case, it will be appreciated that the private key should be securely transported to the AS. Methods exist within the art for this - e.g. multi-part key export and import, and will be apparent to those skilled in the art.

The BTI of the present invention supports the concept of a CA hierarchy for very large deployments. In this case, each CA must have its public key signed by a higher level CA with a chain right back to a root CA. This allows an AS to "walk the chain" of signatures provided by the CA to establish that another AS is part of the scheme. Different forms of asymmetric cryptography exist and are applicable in this scheme include RSA (Rivest, Shamir, Adelman) and EC (Elliptic Curve) techniques.

The authentication data is protected in transit by encrypting it, using the above keys, before transmission. However, as detailed in earlier sections, parts of the authentication data may pass through multiple entities before reaching its final destination. For example, biometric data captured at a biometric capture device may pass through a local PC, through a PA, through a FAS, before finally reaching the HAS where it is matched. To protect the biometric from intermediaries it is encrypted with the public key of the final destination AS, as near to the capture point as possible. Such encryption may take place on the biometric device itself, or on an attached local PC. In this way the biometric is securely tunnelled through intermediate entities, who may add additional information to the request without being able to access the sensitive biometric data.

It will be appreciated that the present invention provides for a distributed network having trusted interaction between individual components and that by interfacing with a set of biometric identifiers stored at a remote server that a partner application can authenticate a user identity.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. An authentication system adapted to provide an authentication of one or more users over a networked architecture using one or more biometric identifiers previously associated with the users to authenticate the users, the system comprising at least two computing devices at separate nodes in the network:
a first device at a first node being adapted to receive a request for authentication of a user connecting to that node, the request for authentication including a biometric identifier provided by the user, the first device being further adapted based on a indica associated with that user to determine a second device at a second node for the user, the second device having a previously stored biometric identifier associated with the user, the first device being further adapted to forward a request for retrieval at the second device of the previously stored biometric identifier associated with the user to that second device,
the second device being adapted upon receipt of the request from the first device to retrieve the previously stored identifier for that user,
comparison means adapted to establish an authentication of the user based on a positive comparison between the identifier provided by the user at the first device and one previously stored and associated with the user at the second device.

2. The system as claimed in claim 1 wherein the system provides a framework for establishing a network of authenticating servers and associated biometric capture devices, and wherein one or more of the authenticating servers or biometric capture devices can establish and assert a user identity to other authenticating servers or biometric capture devices.

3. The system as claimed in any preceding claim wherein the computing devices at each node are selected from one or more of the following:
a) an authentication server,
b) a biometric capture device.

4. The system as claimed in claim 3 wherein the computing device at the first node is a biometric capture device.

5. The system as claimed in claim 3 wherein the computing device at the first node comprises a biometric capture device and an authentication server.

6. The system as claimed in any one of claim 3 to 5 wherein the computing device at the second node comprises an authentication server.

7. The system as claimed in any preceding claim wherein the computing device at each of the first and second node is an authentication server and can provide for an authentication of a user.

8. The system as claimed in claim 1 wherein the comparison means are provided at the first device, such that on retrieval of the previously stored identifier at the second device, the second device is adapted to forward a copy of the identifier to the first device, which upon receipt is adapted to effect a comparison.

9. The system as claimed in claim 1 wherein the comparison means are provided at the second device, such that on retrieval of the previously stored identifier at the second device, the second device is adapted to effect a comparison between the identifier forwarded by the first device to the second device and that previously stored and associated with the user.

10. The system as claimed in claim 9 wherein the second device upon effecting a comparison of the provided identifier with the previously stored identifier is adapted to effect a communication to the first device detailing the result of the authentication process.

11. The system as claimed in any preceding claim wherein the second device is provided with means to effect a search of a plurality of previously stored biometric identifiers based on a indica associated with that user.

12. The system as claimed in any preceding claim further comprising verification means at at least one of the first and second devices, the verification means adapted to effect a verification of the identity of the other of the first and second device.

13. The system as claimed in any preceding claim wherein communications between the first and second devices are by means of a secure communication channel.

14. The system as claimed in claim 13 wherein the secure communication channel is provided by one or more of the following protocols:
a) Secure Socket Layer (SSL),
b) eXtensible Mark Up Language (XML),
c) digital certificates, or
d) any form of symmetric or asymmetric cryptography,

15. The system as claimed in any preceding claim wherein the network is one or more of the following:
a) a private network,
b) the internet,
c) a mobile network.

16. The system as claimed in any preceding claim wherein the indica associated with the user is input to the system by a reader provided at the first device, the reader being selected from one or more of the following:
a) a keyboard,
b) a magnetic stripe card,
c) a chip card
d) a 2-dimensional bar code

17. The system as claimed in claim 16 wherein the indicia are associated with a claim of identity as asserted by the user providing the biometric identifier.

18. The system as claimed in any preceding claim further including a partner application device located at the first node, the partner application device adapted, upon authentication of the user, to process a request provided by the user.

19. The system as claimed in any preceding claim further comprising a directory service, the directory service being provided at one or more nodes within the network and including routing information for enrolled users of the system, the routing information providing an indication of an appropriate second device from a plurality of available second devices for routing the provided identifier for comparison against the previously stored identifiers for authentication of the user.

20. The system as claimed in any one of claims 1 to 18 wherein the selection of the correct second device for authentication of a user is determined in a hierarchical fashion, the first device being adapted to test a sequence of available devices based on their hierarchical status within the networked architecture, and to select the first available second device which has an appropriate stored identifier for comparison against the provided identifier.

21. The system as claimed in any preceding claim further including a policy manager, the policy manager being adapted to determine a suitable biometric identifier for presentation by the user for subsequent authentication against a similar type identifier previously stored by the user.

22. The system as claimed in claim 21 wherein the policy manager is adapted to provide for a prompting of two or more biometric identifiers for presentation by the user for subsequent authentication.

23. The system as claimed in claim 22 wherein the two or more identifiers are of the same type.

24. The system as claimed in claim 22 comprising a plurality of available second devices, and wherein the two or more presented identifiers are compared against different available second devices for authentication of the user.

25. The system as claimed in any one of claims 21 to 24 wherein the policy manager is adapted to interface with the comparison means so as to provide for an authentication of the user, the policy manager providing the final decision as to whether a user should be identified as authenticated.

26. The system as claimed in claim 25 wherein the policy manager is co-located with the comparison means.

27. The system as claimed in claim 25 or 26 wherein the policy manager is adapted to associate a confidence level with the request for authentication such that authentication of a user based on comparison of the provided identifier with a previously stored identifier is only effected once the confidence level is exceeded.

28. The system as claimed in claim 27 wherein the confidence level selected for the request for authentication is selectable from one or more available confidence levels defined within the policy manager.

29. The system as claimed in any preceding claim further including means for mutual authentication of the first and second devices by one another.

30. The system as claimed in claim 29 further including means for forwarding the stored identifier from the second device to the first device for subsequent comparison with the presented identifier on authentication of the first device by the second device.

31. The system as claimed in claim 30 wherein the means for forwarding the stored identifier further includes means for encrypting the identifier prior to forwarding of the identifier to the second device.

32. The system as claimed in claim 1 further including means for generating enrolment templates for specific biometric matching algorithms based on the previously stored biometric identifier, the enrolment templates being based on the originally provided biometric identifier.

33. The system as claimed in claim 32 wherein two or more biometric matching algorithms are used in the comparison of a presented identifier with a previously stored identifier.

34. The system as claimed in any preceding claim further including means for associating an authenticated user with an encryption key, and using that encryption key to enable the user to sign data.

35. The system as claimed in claim 34 wherein the associated encryption key is a key that is retrieved from a datastore based on a matching of the presented biometric by the user to a plurality of previously stored keys, so as to determine a correct key for the authenticated user.

36. An authentication system adapted to provide an authentication of one or more users over a networked architecture using one or more biometric identifiers previously associated with the users to authenticate the users, the system comprising at least two computing devices at separate nodes in the network:
a first device at a first node being adapted to receive a request for authentication of a user connecting to that node, and based on a indica associated with that user to determine a home device at a second node for the user and to forward a biometric identifier to that home device for authentication,
the home device having comparison means adapted to provide for an authentication of the user based on a positive comparison between the identifier provided by the user at the first device and one previously stored and associated with the user at the home device.

37. The system as claimed in claim 36 wherein the home device is adapted to perform the authentication only upon verification of the identity of the first node.

38. An authentication system adapted to provide an authentication of one or more users over a networked architecture using one or more biometric identifiers previously associated with the users to authenticate the users, the system comprising at least two computing devices at separate nodes in the network:
a first device at a first node being adapted to receive a request for authentication of a user connecting to that node, and based on a indica associated with that user to determine a home device at a second node for the user, the home device having a previously stored identifier associated with the user, the first device being adapted to forward a request for the previously stored biometric identifier to the home device, and on receipt of the previously stored identifier from the home device to authenticate the user upon effecting a valid comparison between the identifier provided by the user and that supplied by the home device,
the home device upon receiving the request for the biometric identifier being adapted to select the correct biometric identifier for that request based on an indica associated with the user and the request, and to forward a copy of the identifier to the first device, and
wherein the home device effects a forwarding of the biometric identifier associated with the user upon verification of the identity of the first device.

39. The system as claimed in claim 38 wherein the authentication effected at the first device is effected using an authentication server of a biometric capture device.

40. A method of authenticating the identity of one or more users over a networked architecture the method comprising the steps of:
a) receiving a request for authentication of a user identity at a first network node,
b) determining a home node for that user, the home node having a previously stored biometric identifier associated with the user,
c) forwarding a request for authentication of the user to the home node, the request including a biometric identifier captured for that user, the receipt of the biometric identifier at the home node effecting a comparison of the received identifier with the previously stored identifier,
d) receiving confirmation at the first node that the user is authenticated upon effecting a match between the received identifier and the stored identifier.

41. The method as claimed in claim 40 wherein the comparison at the home node is only effected upon verification of the identity of the first node by the home node.

42. The method as claimed in claim 41 wherein the authentication received at the first node from the home node is accepted only upon verifying the identity of the home node.

43. A method of authenticating the identity of one or more users over a networked architecture the method comprising the steps of:
a) receiving a request for authentication of a user identity at a first network node, the request including a biometric identifier associated with the user,
b) determining a home node for that user, the home node having a previously stored biometric identifier associated with the user,
c) forwarding a request for a copy of the stored identifier to the home node, the request including an identifier associatable with the biometric identifier stored for that user,
d) receiving a copy of the previously stored identifier from the home node
e) comparing the retrieved previously stored identifier with the captured identifier and authenticating the user upon confirming a matching set, and
wherein the home node only returns a copy of the stored identifier to the first node upon verification of the identity of the first node.

44. The method as claimed in any one of claim 40 to 43 further comprising the step of, on receipt of the captured identifier at the home node, effecting a search of a plurality of previously stored biometric identifiers based on a indica associated with the user who supplied the captured identifier.

45. The method as claimed in any claim 44 wherein the indicia search is effected using a tree structure directory service.

46. The method as claimed in any claim 45 wherein the indicia search is effected using a directory server networked between the first node and the home node.

47. The method as claimed in any one of claims 40 to 46 further comprising the step of verifying the identity of the first node and home node by the other of the first and home node.

48. The method as claimed in any one of claims 40 to 47 wherein communications between the first and homenode are by means of a secure communication channel.

49. The method as claimed in claim 48 wherein the secure communication channel is provided by one or more of the following protocols:
a) Secure Socket Layer (SSL),
b) eXtensible Mark Up Language (XML), or
c) digital certificates,

50. The method as claimed in any one of claims 40 to 49 when implemented on one or more of the following network types:
a) a private network,
b) the internet,
c) a mobile network.

51. The method as claimed in any one of claims 40 to 49 comprising the steps of reading indica associated with the user by means of a reader provided at the first node, the reader being selected from one or more of the following:
a) a keyboard,
b) a magnetic stripe card,
c) a chip card
d) a 2-dimensional bar code

52. The method as claimed in any one of claims 40 to 51 further comprising the step of processing a user request upon authentication of the identity of the user.
